# EUROPEAN PATENT APPLICATION

(11) **EP 2 675 216 A1**
(43) Date of publication of application: **18.12.2013**
(21) Application number: 12745299.3
(22) Date of filing: 07.02.2012
(51) Int. Cl.: H04W 36/14, H04W 36/28, H04W 48/18

(54) **MOBILE COMMUNICATION METHOD**

(30) Priority: 07.02.2011 JP 2011024385
(71) Applicant: NTT DOCOMO, INC., Chiyoda-ku Tokyo 100-6150 (JP)
(72) Inventor: NISHIDA, Katsutoshi, Tokyo 100-6150 (JP); KOSHIMIZU, Takashi, Tokyo 100-6150 (JP); TAKAHASHI, Hideaki, Tokyo 100-6150 (JP); IWAMURA, Mikio, Tokyo 100-6150 (JP)
(74) Representative: HOFFMANN EITLE
(86) International application number: PCT/JP2012/052656
(87) International publication number: WO 2012/108396

(57) **Abstract**

A mobile communication method according to the present invention includes the step of, if handover of bearers configuring a path for a video communication from E-UTRAN to UTRAN fails, causing a MME or a MSC server to decide whether to hand over only a PS voice bearer of the bearers from E-UTRAN to UTRAN or to cancel the handover of the bearers.

## Description

### TECHNICAL FIELD

The present invention relates to a mobile communication method.

### BACKGROUND ART

Heretofore, a mobile communication system capable of accommodating a radio access network of 2G/3G scheme (UTRAN: Universal Terrestrial Radio Access Network) and a radio access network of LTE (Long Term Evolution) scheme (E-UTRAN: Evolved Universal Terrestrial Radio Access Network) has been known.

A "vSRVCC (Single Radio Video Call Continuity) scheme" is stated in 3GPP TR23.886 (see Non-patent document 1). The vSRVCC scheme is a scheme for switching a path for a video communication (Video Call) performed between a UE (User Equipment) #1 and a UE#2 from a path via E-UTRAN (a path for a packet switch (PS) communication, i.e., for a VoIP (Voice over IP) communication) to a path via UTRAN (a path for a circuit switch (CS) communication).

In addition, 3GPP TR23.237 specifies a SRVCC scheme (hereinafter referred to as an improved SRVCC scheme) for switching a path for a voice communication performed between the UE#1 and the UE#2 from a path via E-UTRAN to a path via UTRAN, with an ATCF (Access Transfer Control Function) and an ATGW (Access Transfer Gateway) in a serving network of the UE#1 as anchor points, without disconnecting the path for the voice communication (see Non-patent document 2).

We assume a scheme (hereinafter an improved vSRVCC scheme) obtained by applying the SRVCC scheme to the vSRVCC scheme. The improved vSRVCC scheme enables a signal necessary for switching the path for the video communication performed between the UE#1 and the UE#2 to be terminated in the serving network of the UE#1, and thereby enables reduction of communication instantaneously disrupted time due to transmission of such a signal between the serving network of the UE#1 and a home network of the UE#1, as compared with the conventional vSRVCC scheme.

### PRIOR ART DOCUMENT

### NON-PATENT DOCUMENT

Non-patent document 1: 3GPP TR23.886
Non-patent document 2: 3GPP TR23.237

### SUMMARY OF THE INVENTION

### PROBLEM TO BE SOLVED BY THE INVENTION

However, the vSRVCC scheme and the improved vSRVCC scheme described above have a problem that a video communication service is interrupted if handover of bearers configuring a path for the video communication from E-UTRAN to UTRAN fails.

Thus, the present invention has been made in view of the above problem, and an objective thereof is to provide a mobile communication method capable of keeping on a voice communication service even if handover of bearers configuring a path for a video communication from E-UTRAN to UTRAN with the vSRVCC scheme or the improved vSRVCC scheme fails.

### MEANS FOR SOLVING THE PROBLEM

A first characteristic of the present invention is summarized in that a mobile communication method in a mobile communication system which includes: a first radio access network not supporting a circuit-switched communication; a mobile transmission network accommodating the first radio access network; a second radio access network supporting the circuit-switched communication; a core network accommodating the second radio access network; and a service control network, and which is capable of switching a path for a video communication performed between a first mobile station and a second mobile station from a path via the first radio access network to a path via the second radio access network without disconnecting the path for the video communication. The method includes the step of if handover of bearers configuring the path for the video communication from the first radio access network to the second radio access network fails, causing a mobility management node in the mobile transmission network or a server for a circuit switch in the core network to decide whether to hand over only a voice bearer of the bearers from the first radio access network to the second radio access network or to cancel the handover of the bearers.

### EFFECT OF THE INVENTION

As described above, the present invention can provide the mobile communication method capable of keeping on a voice communication service even in the case of an operation where handover of bearers configuring a path for a video communication from E-UTRAN to UTRAN with the vSRVCC scheme or the improved vSRVCC scheme fails.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a sequence diagram for explaining an operation of the mobile communication system according to the first embodiment of the present invention.
[Fig. 3] Fig. 3 is another sequence diagram for explaining the operation of the mobile communication system according to the first embodiment of the present invention.
[Fig. 4] Fig. 4 is an overall configuration diagram of a mobile communication system according to a first modified example of the present invention.
[Fig. 5] Fig. 5 is a sequence diagram for explaining an operation of the mobile communication system according to the first modified example of the present invention.
[Fig. 6] Fig. 6 is another sequence diagram for explaining the operation of the mobile communication system according to the first modified example of the present invention.

### MODE FOR CARRYING OUT THE INVENTION

### (Mobile Communication System according to First Embodiment of Present Invention)

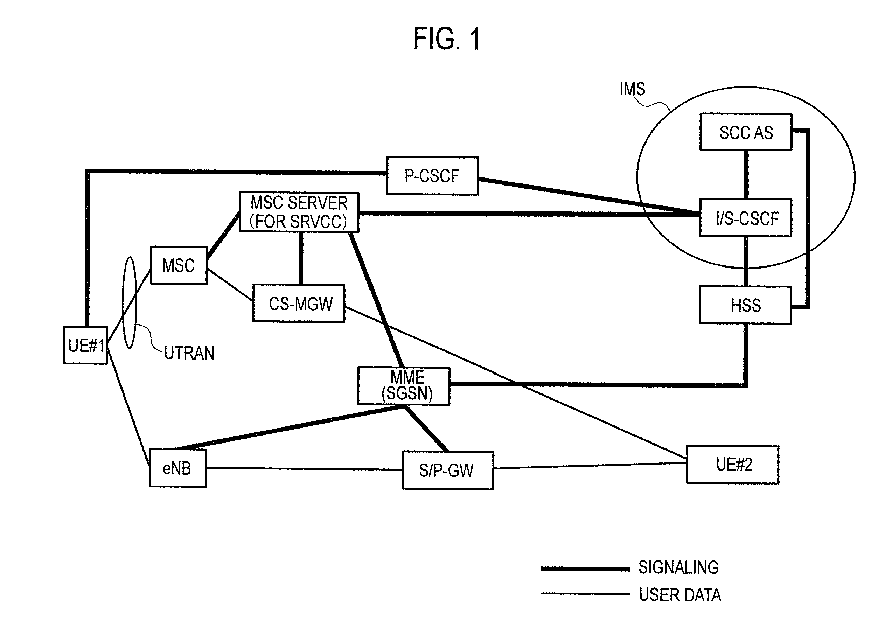

A mobile communication system according to a first embodiment of the present invention is described with reference to Figs. 1 to 3.

With the mobile communication system according to this embodiment, even if handover of bearers configuring a path for a video communication from E-UTRAN to UTRAN with the vSRVCC scheme fails, it is possible to switch from a path via E-UTRAN (path for an IMS VoIP communication) to a path via UTRAN (path for a circuit-switched communication) without disconnecting a communication between a UE#1 and a UE#2 and to keep on a voice communication service.

As shown in Fig. 1, the mobile communication system according to this embodiment accommodates E-UTRAN and UTRAN.

Specifically, as shown in Fig. 1, in a serving network of the UE#1, the mobile communication system according to this embodiment includes an eNB (radio base station), a RNC (Radio Network Controller, not illustrated), a NodeB (radio base station, not illustrated), a MME (Mobility Management Entity, mobility management node), a S-GW (Serving-Gateway, serving gateway device), a P-GW (PDN-Gateway, PDN gateway device), a P-CSCF (Proxy-Call Session Control Function), a MSC (Mobile-service Switching Center, circuit switch), a SGSN (Serving GPRS Support Node, packet switch), a MSC server, a CS (Circuit Switch)-MGW (Media Gateway), and the like.

In addition, the mobile communication system according to this embodiment includes an SCC AS, I/S-CSCF, and the like in an IMS (IP Multimedia Subsystem).

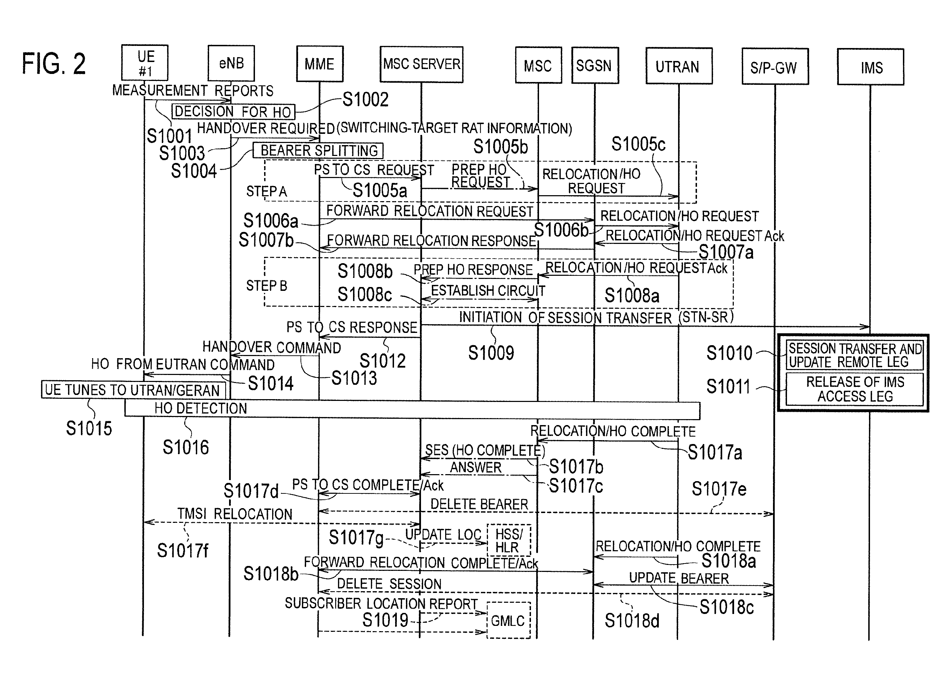

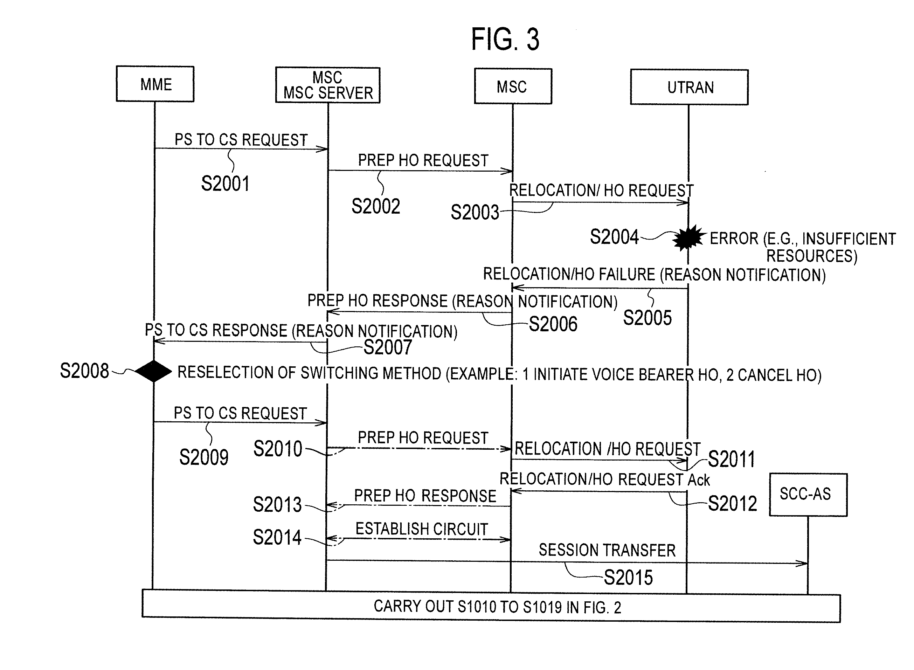

Hereinbelow, an operation of the mobile communication system according to this embodiment is described with reference to Figs. 2 and 3.

First of all, with reference to Fig. 2, a description is given of an operation 1 where the mobile communication system according to this embodiment switches from a path via E-UTRAN to a path via UTRAN without disconnecting a video communication performed between the UE#1 and the UE#2. In other words, shown below is the operation in the case where the switching from the video communication over E-UTRAN to a circuit-switched communication over UTRAN succeeds.

Parts of the operation which are the same as those specified in 3GPP TS23.216 are not described. Note that the parts may be replaced by another operation.

As shown in Fig. 2, In Step S1001, the UE#1 sends a "Measurement Report" to the eNB.

If the eNB judges in Step S1002 that PS bearers (PS video bearer and PS voice bearer) configuring the path for the video communication described above are a target of switching with the vSRVCC scheme, the eNB decides to perform handover of the bearers from E-UTRAN to UTRAN/GERAN, and sends a "Handover Required" to the MME in Step S1003.

In this event, the eNB may notify the MME of switching-target RAT (Radio Access Technology) information (or capability information of switching-target radio base station).

For example, the switching-target RAT information (or capability information of a switching-target radio base station) may include information on whether or not a switching-target cell is capable of providing a video communication by means of a CS communication, information on the radio capability of a switching-target cell, information on whether or not the switching-target cell is capable of providing a VoIP communication, and the like.

In addition, the eNB may decide, of the bearers configuring the path for the video communication described above, whether to switch from both the PS video bearer and the PS voice bearer to a CS video bearer or to switch from only the PS voice bearer to a CS voice bearer (or PS voice bearer in UTRAN), and notify the MME of the decision result.

For example, as the decision result, the eNB may notify the MME of: a "Video & PS (information indicating that, of the PS bearers configuring the path for the video communication, the PS video bearer and the PS voice bearer are switched to the CS video bearer, and the other PS bearers are switched as well)"; a "Video only (information indicating that the PS video bearer and the PS voice bearer, of the PS bearers configuring the path for the video communication, are switched to the CS video bearer)"; a "Video to Voice & PS (information indicating that, of the PS bearers configuring the path for the video communication, only the PS voice bearer is switched to the CS voice bearer (or PS voice bearer in UTRAN), the PS video bearer is disconnected, and the other PS bearers are switched as well)"; "Video to Voice only (information indicating that, of the PS bearers configuring the path for the video communication, only the PS voice bearer is switched to the CS voice bearer (or PS voice bearer in UTRAN) and the PS video bearer is disconnected)"; or the like.

In Step S1004, the MME may decide, of the PS bearers configuring the path for the video communication described above, whether to switch from both the PS video bearer and the PS voice bearer to the CS video bearer or to switch from only the voice bearer to the CS voice bearer (or PS voice bearer in UTRAN), on the basis of vSRVCC information that the MME has acquired at the time of start of the video communication described above and holds, the switching-target RAT information received from the eNB, a subscriber profile of the Use#1, an operator policy, and the like.

Here, the vSRVCC information is information on whether or not each PS bearer configuring the path for the video communication described above is a target of switching with the vSRVCC scheme.

Note that, when the MME receives the above decision result from the eNB, the MME may follow the decision result.

Hereinbelow, a description is given of a case where the MME switches from the PS video bearer and the PS voice bearer configuring the path for the video communication described above to the CS video bearer. Note that, if, of the PS bearers configuring the path for the video communication described above, the MME switches from only the PS voice bearer to the CS voice bearer and disconnects the PS video bearer, processing which is the same as that in Step S2009 and later shown in Fig. 3 to be described below is performed.

Further, although an example of performing handover of the PS bearers other than the PS bearers configuring the path for the video communication described above is shown below, the present invention is applicable irrespective of whether or not the handover of such PS bearers is performed.

In Step S1005a, the MME sends the MSC server a "PS to CS Request" for requesting switching from both the PS video bearer and the PS voice bearer to the CS video bearer.

Note that the "PS to CS Request" does not need to include a status of the PS bearers and may be in the form of a signal for requesting CS video bearer establishment, for example. The same holds for an exchange between the MME and the MSC server and an exchange between the MSC server and the MSC to be described below.

In Step S1005b, the MSC server sends the MSC a "PS to CS Request" for requesting switching from both the PS video bearer and the PS voice bearer to the CS video bearer.

In Step S1005c, the MSC sends UTRAN/GERAN a "Relocation/HO Request" for requesting securement of resources for the video communication described above (resources for a video communication such as a BS30 bearer).

Moreover, in Step S1006a, the MME sends the SGSN a "Forward Relocation Request" for requesting switching of the other PS bearers.

In Step S1006b, the SGSN sends UTRAN a "Relocation/HO Request" for requesting securement of resources for the PS communication described above.

In Step S1007a, UTRAN sends the SGSN a "Relocation/HO Request Ack" for notifying success in the securement of the resources for the PS communication described above. In Step S1007b, the SGSN sends a "Forward Relocation Response" to the MME.

In Step S1008a, UTRAN secures the resources for the video communication described above in response to the notification from the MSC, and sends the MSC a "Relocation/HO Request Ack" for notifying success in the securement of the resources for the video communication.

In Step S1008b, the MSC sends a "Prep HO Response" to the MSC server. In Step S1008c, a circuit is established between the MSC and the MSC server.

In Step S1009, the MSC server sends an "Initiation of Session Transfer (STN-SR)" to the IMS.

In this event, the MSC server may notify the IMS of a method of switching the bearers configuring the path for the video communication described above (information on whether to switch from both the PS video bearer and the PS voice bearer, configuring the path for the video communication, to the CS video bearer, or to switch from only the PS voice bearer, of the PS video bearer and the PS voice bearer configuring the path for the video communication, to the CS voice bearer (or PS voice bearer in UTRAN)).

Note that, in this example, switching from both the PS video bearer and the PS voice bearer, configuring the path for the video communication, to the CS video bearer may be notified.

In addition, in the case where the MSC server notifies the IMS of the switching from only the PS voice bearer, of the PS video bearer and the PS voice bearer configuring the path for the video communication, to the CS voice bearer (or PS voice bearer in UTRAN), the MSC server may notify the IMS of a reason for this switching as well (e.g., insufficient radio resources in UTRAN and the like).

In this case, the IMS devices such as the SCC AS and the S-CSCF can perform special processing in terms of charging control, along with a change in the type of service.

In Step S1010 and Step S1011, the IMS notifies the UE#2 of information on the switching of the path for the video communication described above, information on a bearer (media) which is successively used after the switching, and so on.

Subsequent operations in Step S1012 to Step S1019 are the same as those specified in 3GPP TR23.886. Note that the operations in Step S1012 to Step S1019 may be operations of continuing appropriate switching processing in accordance with other specifications.

Secondly, with reference to Fig. 3, a description is given of an operation 2 where the mobile communication system according to this embodiment switches a path for a video communication performed between the UE#1 and the UE#2 from a path via E-UTRAN to a path via UTRAN without disconnecting the path for the video communication and keeps on a voice communication service.

The example of Fig. 3 shows the operation in the case where the PS video bearer and the PS voice bearer configuring the path for the video communication described above cannot be switched to the CS video bearer, such as the case where the resources for the video communication described above cannot be secured on UTRAN side.

Parts of the operation which are the same as those specified in 3GPP TS23.216 are not described. Note that the parts may be replaced by another operation.

After the operations in Step S1001 to Step S1004 shown in Fig. 2 are performed, as shown in Fig. 3, the MME sends the MSC server a "PS to CS Request" for requesting switching from both the PS video bearer and the PS voice bearer to the CS video bearer in Step S2001.

In Step S2002, the MSC server sends the MSC a "PS to CS Request" for requesting switching from both the PS video bearer and the PS voice bearer to the CS video bearer.

In Step S2003, the MSC sends UTRAN a "Relocation/HO Request" for requesting securement of resources for the video communication described above (resources for a video communication such as a BS30 bearer).

If the handover from the PS video bearer and the PS voice bearer in E-UTRAN to the CS video bearer in UTRAN fails due to insufficient resources in UTRAN (e.g. , RNC) and the like in Step S2004, UTRAN sends the MSC a "Relocation/HO Failure" for notifying this failure in Step S2005.

In this event, UTRAN may notify the MSC of a reason for the handover failure described above by means of a "reason notification" included in the "Relocation/HO Failure" ("No Radio Resources Available in Target cell", for example).

In Step S2006, the MSC sends a "Prep HO Response" to the MSC server. In this event, the MSC may include the "reason notification" described above in the "Prep HO Response".

In Step S2007, the MSC server sends a "PS to CS Response" to the MME. In this event, the MSC server may include the "reason notification" described above in the "PS to CS Response".

In Step S2008, the MME decides whether to switch from (hand over) only the PS voice bearer, of the PS bearers configuring the path for the video communication described above in E-UTRAN, to the CS voice bearer (or PS voice bearer) in UTRAN or to cancel the switching (handover) of the PS bearers configuring the path for the video communication described above in E-UTRAN. In this event, the MME may make the above decision on the basis of the vSRVCC information that the MME holds, the switching-target RAT information received from the eNB, the subscriber profile of the UE#1, the operator policy, the "reason notification" described above, and the like.

Hereinbelow, a description is given of an operation in the case where the MME decides to switch from (hand over) only the PS voice bearer, of the PS bearers configuring the path for the video communication described above in E-UTRAN, to the CS voice bearer in UTRAN in Step S2008.

In Step S2009, the MME sends the MSC server a "PS to CS Request" for requesting switching from only the PS voice bearer in E-UTRAN to the CS voice bearer in UTRAN. In this event, the MME may send the "reason notification" described above to the MSC server.

Moreover, in the case where the MME decides to switch from only the PS voice bearer to the voice bearer in UTRAN, a switching-target domain may be any of a CS domain and PS domain.

Such decision may be made based on "information on whether or not a switching-target cell is capable of providing a VoIP communication" which is received from the eNB in Step S1003 of Fig. 2.

In this case, an instruction to prepare another PS voice bearer additionally may be made in processing executed in the operations in Step S1006a to Step S1007b of Fig. 2. Here, a signal used in this event may be a signal other than the signals in Step S1006a to Step S1007b.

In Step S2010, the MSC server sends the MSC a "PS to CS Request" for requesting switching from only the PS voice bearer to the CS voice bearer in UTRAN.

In Step S2011, the MSC sends UTRAN a "Relocation/HO Request" for requesting securement of resources for a voice communication.

In Step S2012, UTRAN sends the MSC a "Relocation/HO Request Ack" for notifying success in the securement of the resources for the voice communication described above.

In Step S2013, the MSC sends a "Prep HO Response" to the MSC server. In Step S2014, a circuit is established between the MSC and the MSC server.

In Step S2015, the MSC server sends a "Session Transfer" to the SCC-AS in the IMS. In this event, the MSC server may send the SCC-AS information on the switching of the video communication described above, information on a bearer (media) which is successively used after the switching, and so on.

By using such information, the IMS devices such as the SCC AS and the S-CSCF can conduct special charging along with the change from the video communication to the voice communication, and can also notify an appropriate bearer re-establishment request to the UE#2 being a communication counterpart.

Subsequently, the operations in Step S1010 to Step S1019 shown in Fig. 2 are performed.

On the other hand, if the MME decides to cancel the switching (handover) of the PS bearers configuring the path for the video communication described above in Step S2008, the operation compliant with 3GPP TS23.216 or TR23.886 is carried out. Note that, in this case, the switching (handover) may be cancelled by another operation.

According to the mobile communication system of this embodiment, if handover of the PS video bearer and the PS voice bearer configuring the path for the video communication in E-UTRAN to the CS video bearer in UTRAN with the vSRVCC scheme fails, the MME can decide whether to hand over only the PS voice bearer to the CS voice bearer in UTRAN (or PS voice bearer in UTRAN) or to cancel the handover.

### (First Modified Example)

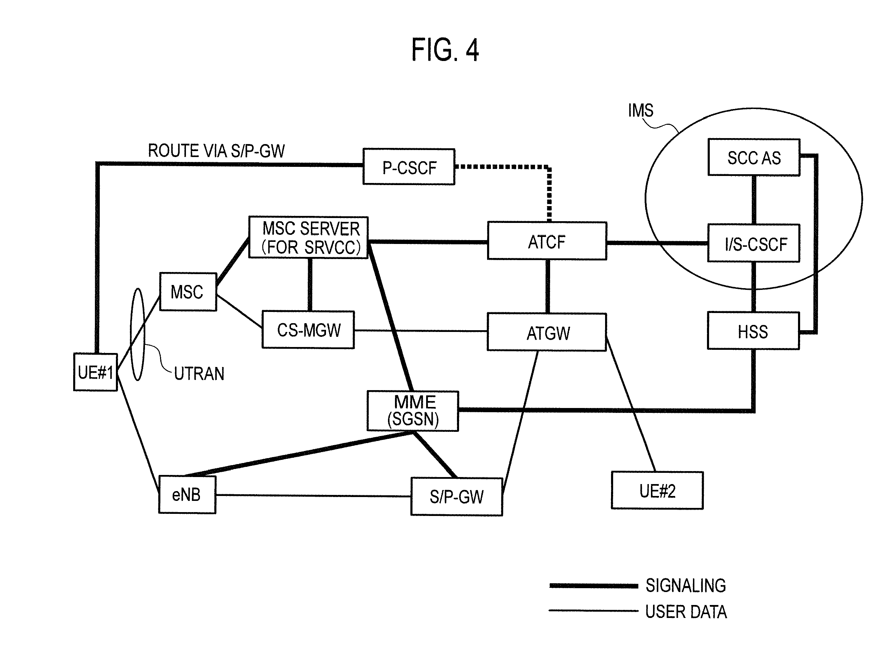

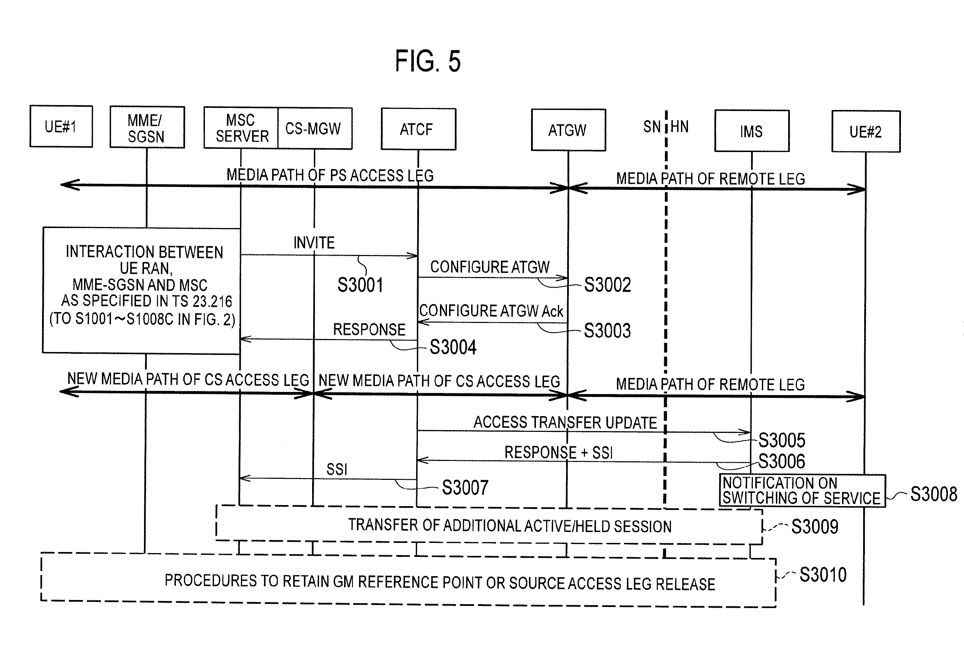

A mobile communication system according to a first modified example of the present invention is described with reference to Figs. 4 and 5. Hereinbelow, the mobile communication system according to the first modified example of the present invention is described mainly in terms of a difference from the mobile communication system according to the first embodiment described above.

With the mobile communication system according to the first modified example, it is possible to switch a path for a video communication performed between the UE#1 and the UE#2, with the improved vSRVCC scheme, from a path via E-UTRAN/UTRAN (path for an IMS VoIP communication) to a path via UTRAN (path for a circuit-switched communication) without disconnecting the path for the video communication.

As shown in Fig. 4, the mobile communication system according to the first modified example includes an ATCF (Access Transfer Control Function), an ATGW (Access Transfer Gateway), and the like in addition to the configuration of the mobile communication system according to the first embodiment shown in Fig. 1.

Note that, in the improved vSRVCC scheme, the ATGW is an anchor node configured to perform the switching described above, and the ATCF is a controller configured to control the ATGW.

With reference to Fig. 5, a description is given of an operation 1 where the mobile communication system according to the first modified example switches a path for a video communication performed between the UE#1 and the UE#2 from a path via E-UTRAN to a path via UTRAN/GERAN without disconnecting the path for the video communication.

Parts of the operation which are the same as those specified in 3GPP TS23.237 are not described. Note that the parts may be replaced by another operation.

After the operations in Step S1001 to Step S1008c shown in Fig. 2 are performed, as shown in Fig. 5, the MSC server sends an "INVITE" to the ATCF in Step S3001.

In this event, the MSC server may notify the ATCF of information on the switching of the path for the video communication described above, information on a bearer (media) which is successively used after the switching, and so on.

In Step S3002, the ATCF sends a "Configure ATGW" to the ATGW.

In this event, if the ATCF detects a change in the status of the video communication described above, the ATCF sets up the ATGW again in response to the change. For example, if the ATCF detects that only the PS voice bearer, of the PS bearers configuring the path for the video communication described above, is switched to the CS voice bearer in UTRAN (or PS voice bearer in UTRAN), the ATCF sets up the ATGW again in such a way that the ATGW passes a voice communication only.

In step S3003, the ATGW sends a "Configure ATGW Ack" to the ATCF. In Step S3004, the ATCF sends a "Response" to the MSC server.

In Step S3005, the ATCF sends an "Access Transfer Update" to the IMS. In this event, the ATCF may notify the IMS of information on the switching of the video communication described above, information on a bearer (media) which is successively used after the switching, and so on.

By using such information, the IMS devices such as the SCC AS and the S-CSCF can conduct special charging along with the change from the video communication to the voice communication, and can also send an appropriate bearer re-establishment request to the UE#2 being a communication counterpart.

In Step S3006, the IMS sends a "Response + SSI" to the ATCF. In Step S3007, the ATCF sends a "SSI" to the MSC server.

In Step S3008, the IMS may notify the UE#2 of information on the switching of the video communication described above, information on a bearer (media) which is successively used after the switching, and so on.

Subsequent operations in Step S3009 and Step S3010 are the same as those specified in 3GPP TS23.237.

### (Second Modified Example)

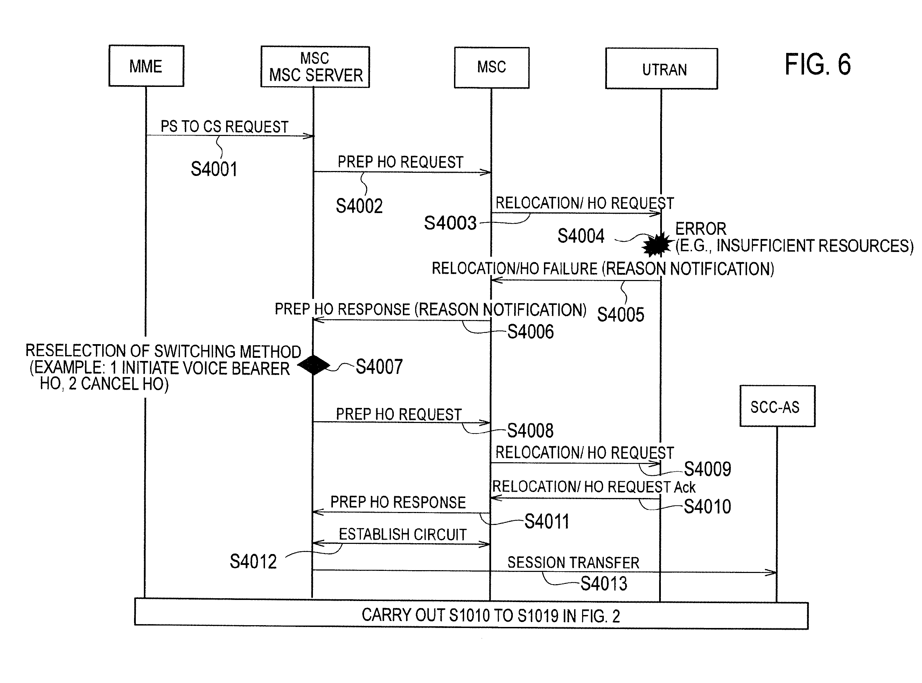

With reference to Fig. 6, a description is given of an operation 2 where a mobile communication system according to a second modified example switches a path for a video communication performed between the UE#1 and the UE#2 from a path via E-UTRAN to a path via UTRAN without disconnecting the path for the video communication. Note that the operation of Fig. 6 is also applicable to the mobile communication system according to the first modified example described above.

The example of Fig. 6 shows the operation in the case where the PS video bearer and the PS voice bearer configuring the path for the video communication described above cannot be switched to the CS video bearer, such as the case where the resources for the video communication described above cannot be secured on UTRAN side.

Parts of the operation which are the same as those specified in 3GPP TS23.216 or TR23.886 are not described. Note that the parts may be replaced by another operation.

After the operations in Step S1001 to Step S1004 shown in Fig. 2 are performed, as shown in Fig. 6, the MME sends the MSC server a "PS to CS Request" for requesting switching from both the PS video bearer and the PS voice bearer configuring the path for the video communication described above to the CS video bearer in Step S4001.

In this event, the MME may notify the MSC server of a "fallback availability" indicating an operation in the case where the switching (handover) from both the PS video bearer and the PS voice bearer configuring the path for the video communication described above to the CS video bearer fails (e.g. , whether to switch from only the PS voice bearer in E-UTRAN to the CS voice bearer (or PS voice bearer) in UTRAN or to cancel the switching of the PS bearers configuring the path for the video communication described above).

In Step S4002, the MSC server sends the MSC a "PS to CS Request" for requesting switching from both the PS video bearer and the PS voice bearer configuring the path for the video communication described above to the CS video bearer.

In Step S4003, the MSC sends UTRAN a "Relocation/HO Request" for requesting securement of resources for the video communication described above.

If the handover from the PS video bearer and the PS voice bearer to the CS video bearer in UTRAN fails due to insufficient resources in UTRAN (e.g. , RNC) and the like in Step S4004, UTRAN sends the MSC a "Relocation/HO Failure" for notifying this failure in Step S4005.

In this event, UTRAN may notify the MSC of a reason for the handover failure described above by means of a "reason notification" included in the "Relocation/HO Failure".

In Step S4006, the MSC sends a "Prep HO Response" to the MSC server. In this event, the MSC may include the "reason notification" described above in the "Prep HO Response".

In Step S4007, the MSC server decides whether to switch from (hand over) only the PS voice bearer configuring the path for the video communication described above to the CS voice bearer (or PS voice bearer) in UTRAN or to cancel the switching (handover) of the PS bearers configuring the path for the video communication described above.

In this event, the MSC server may make the above decision on the basis of the vSRVCC information that the MSC server holds, the operator polity, the "reasonnotification" described above, the congestion status of the RNC, the "fallback availability" described above, and the like.

If the MSC server decides to switch from (hand over) only the PS voice bearer configuring the path for the video communication described above to the CS voice bearer in UTRAN, the MSC server sends the MSC a "PS to CS Request" for requesting switching from only the PS voice bearer to the CS voice bearer in UTRAN in Step S4008.

In Step S4009, the MSC sends UTRAN a "Relocation/HO Request" for requesting securement of resources for the voice communication described above.

In Step S4010, UTRAN sends the MSC a "Relocation/HO Request Ack" for notifying success in the securement of the resources for the voice communication described above.

In Step S4011, the MSC sends a "Prep HO Response" to the MSC server. In Step S4012, a circuit is established between the MSC and the MSC server.

In Step S4013, the MSC server sends a "Session Transfer" to the SCC-AS in the IMS. Note that, in the second modified example, the MSC server sends it to the ATCF. In this event, the MSC server may notify the SCC-AS or the ATCF of information on the switching of the video communication described above, information on a bearer (media) which is successively used after the switching, and so on.

Subsequently, the operations in Step S1010 to Step S1019 shown in Fig. 2 are performed.

According to the mobile communication system of the second modified example, if handover of the PS video bearer and the PS voice bearer configuring the path for the video communication to the CS video bearer in UTRAN with the improved vSRVCC scheme fails, the MSC server can decide whether to handover only the PS voice bearer to the CS voice bearer (or PS voice bearer) in UTRAN or to cancel the handover.

The characteristic of this embodiment may be expressed in the following way.

A first characteristic of this embodiment is a mobile communication method in a mobile communication system which includes: E-UTRAN (a first radio access network not supporting a circuit-switched communication); a mobile transmission network accommodating E-UTRAN; UTRAN/GERAN (a second radio access network supporting the circuit-switched communication) ; a core network accommodating UTRAN/GERAN; and an IMS (a service control network), and which is capable of switching a path for a video communication performed between a UE#1 and a UE#2, with a vSRVCC scheme or an improved vSRVCC scheme, from a path via E-UTRAN to a path via UTRAN without disconnecting the path for the video communication. The gist of the mobile communication method is to include the step of, if handover of bearers configuring the path for the video communication from E-UTRAN to UTRAN/GERAN fails, causing a MME (mobility management node) in the mobile transmission network or a MSC server (a server for a circuit switch) in the core network to decide whether to hand over only a PS voice bearer of the bearers from E-UTRAN to UTRAN or to cancel the handover of the bearers (a PS video bearer and the PS voice bearer).

Note that the operations of the MSC server, the CS-MGW, the MME, the SGSN, the S-GW, the P-GW, the P-CSCF, the I/S-CSCF, the SCC AS, the ATCF, the ATGW, the HSS, the MSC, the UE#1, the UE#2, and the eNB described above may be implemented by means of hardware, a software module executed by a processor, or a combination of both.

The software module may be provided in any type of storage medium such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Alternatively, the storage medium may be integrated into the processor. In addition, the storage medium and the processor may be provided in an ASIC. The ASIC may be provided in the MSC server, the CS-MGW, the MME, the SGSN, the S-GW, the P-GW, the P-CSCF, the I/S-CSCF, the SCC AS, the ATCF, the ATGW, the HSS, the MSC, the UE#1, the UE#2, and the eNB. Alternatively, the storage medium and the processor may be provided in the MSC server, the CS-MGW, the MME, the SGSN, the S-GW, the P-GW, the P-CSCF, the I/S-CSCF, the SCC AS, the ATCF, the ATGW, the HSS, the MSC, the UE#1, the UE#2, and the eNB as a discrete component.

Hereinabove, the present invention has been described in detail using the embodiment described above; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

### EXPLANATION OF THE REFERENCE NUMERALS

- UE#1, UE#2: mobile station
- eNB: radio base station
- MME: mobility management node
- SGSN: packet switch
- MSC: circuit switch
- S-GW, P-GW: gateway device

## Claims

1. A mobile communication method in a mobile communication system which includes:
a first radio access network not supporting a circuit-switched communication; a mobile transmission network accommodating the first radio access network; a second radio access network supporting the circuit-switched communication; a core network accommodating the second radio access network; and a service control network, and
which is capable of switching a path for a video communication performed between a first mobile station and a second mobile station from a path via the first radio access network to a path via the second radio access network without disconnecting the path for the video communication,
the method comprising the step of
if handover of bearers configuring the path for the video communication from the first radio access network to the second radio access network fails, causing a mobility management node in the mobile transmission network or a server for a circuit switch in the core network to decide whether to hand over only a voice bearer of the bearers from the first radio access network to the second radio access network or to cancel the handover of the bearers.
